# EUROPÄISCHE PATENTSCHRIFT

(11) **EP 1 872 629 B1**
(45) Veröffentlichungstag und Bekanntmachung des Hinweises auf die Patenterteilung: **17.07.2019**
(21) Anmeldenummer: 06723868.3
(22) Anmeldetag: 30.03.2006
(51) Int. Cl.: H05B 37/02, H05B 41/285, H05B 41/392

(54) **SCHUTZ DES SENDEZWEIGS EINER SCHNITTSTELLENVORRICHTUNG**
PROTECTION OF AN EMITTING BRANCH OF AN INTERFACE DEVICE
PROTECTION DE LA BRANCHE EMETTRICE D'UN DISPOSITIF INTERFACE

(30) Priorität: 22.04.2005 DE 102005018762
(43) Veröffentlichungstag der Anmeldung: 02.01.2008
(73) Patentinhaber: Tridonic GmbH & Co KG, 6851 Dornbirn (AT)
(72) Erfinder: BÖCKLE, Reinhard, A-6841 Mäder (AT)
(74) Vertreter: Rupp, Christian
(86) Internationale Anmeldenummer: PCT/EP2006/002902
(87) Internationale Veröffentlichungsnummer: WO 2006/111257

(56) Entgegenhaltungen:
- US-A- 6 144 539
- US-A1- 2005 012 472
- US-B1- 6 356 027

## Beschreibung

Die vorliegende Erfindung bezieht sich auf Schnittstellenvorrichtungen, wie sie beispielsweise zum Anschluß eines Betriebsgeräts für Leuchtmittel, insbesondere eines elektronischen Vorschaltgeräts für Gasentladungslampen, an wenigstens eine Busleitung Verwendung finden können.

Aus dem Stand der Technik ist es bekannt, Betriebsgeräte für Leuchtmittel, wie beispielsweise elektronische Vorschaltgeräte für Gasentladungslampen, an analoge oder digitale Bussysteme anzuschließen. Als Beispiel für ein digitales Bussystem sei der DALI-Standard genannt.

Derartige digitale Bussysteme sehen beispielsweise Spannungspegel mit einem Wert von beispielsweise maximal 15 Volt vor, so daß die Schnittstelle entsprechend spannungsfest dimensioniert ist.

Indessen kann der Fall auftreten, daß an die Schnittstelle beabsichtigt oder unbeabsichtigt höhere Spannungen wie beispielsweise eine Netzspannung von 220 Volt AC angelegt wird. Grundsätzlich kann der Fall sogar bewußt vorgesehen sein, wenn nämlich die Schnittstelle wie aus dem Stand der Technik bekannt dazu ausgelegt ist, einerseits extern zugeführte Digitalsignale, aber auch Signale von einer mit Netzspannung verbundenen Taster oder Schalter auszuwerten.

Wenn indessen beabsichtigt oder unbeabsichtigt eine Netzspannung an den eingangsseitigen Klemmen (Busanschlüssen) der Schnittstellenschaltung anliegt, muß auf jeden Fall sichergestellt sein, daß im Fall einer bidirektionalen Schnittstellenschaltung der Sendezweig in diesem Zustand nicht freigeschaltet wird, da dieser andernfalls innerhalb kurzer Zeit von der anliegenden hohen Spannung zerstört werden würde.

Eine derartige Schnittstellenschaltung weist wie bekannt eine Steuereinheit wie beispielsweise einen Controller auf, der natürlich bei ordnungsgemäßer Funktion selbst verhindert, daß der Sendezweig bei Anliegen einer Netzspannung an den eingangsseitigen Anschlüssen der Schnittstellenschaltung in leitfähige Verbindung mit den Anschlüssen geraten kann.

Indessen ist die ordnungsgemäße Funktion des Controllers unmittelbar nach Einschaltvorgängen nicht gewährleistet, in denen der Controller undefiniert und insbesondere unbeabsichtigt den Sendezweig freischalten kann. Wenn in diesem Moment also die Netzspannung anliegen sollte, wäre bereits unmittelbar nach dem Einschaltvorgang die Schnittstellenvorrichtung oder zumindest der Sendezweig der Schnittstellenvorrichtung zerstört.

Indessen kann es aber auch passieren, daß bei ordnungsgemäß arbeitenden Controller der Schnittstellenvorrichtung Störungen beispielsweise in einem Trafo zur galvanischen Trennung in der Sendeschaltung eingekoppelt werden und diese Einkopplung zu einem unbeabsichtigten Freischalten des Sendezweigs führt. US6144539 A offenbart eine Anordnung zum Schutz bestimmter Arten von Steuerschaltkreisen gegen von außen angelegte hohe Spannungen und ein Dimmvorschaltgerät, das eine solche Anordnung verwendet.

US6356027 B1 offenbart eine Dimmschnittstellen-Schutzschaltung, die das Vorschaltgerät auf den niedrigsten Lichtausgangspegel klemmt, wenn die Dimmerdrähte und die Leitungseingangsdrähte falsch mit der Netzspannung verbunden sind, um dadurch eine positive Anzeige für eine fehlerhafte Verdrahtung zu liefern.

Die Erfindung setzt an diesem Problem an und hat sich zur Aufgabe gemacht, eine Schnittstellenvorrichtung, die wenigstens einen Sendezweig aufweist, sicher vor einer Beschädigung (Kurzschluß etc.) durch eine hohe anliegende Spannung an den Anschlußklemmen zu schützen. "Hohe Spannung" ist dabei so zu verstehen, dass diese Spannung potentiell Bauteile zerstören kann, deren Versorgungsspannung üblicherweise maximal 24 Volt beträgt. Diese Aufgabe wird genauer gesagt durch die Merkmale der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt der vorliegenden Erfindung ist also eine Schnittstellenschaltung für ein Betriebsgerät für Leuchtmittel vorgesehen, wobei die Schnittstelleneinrichtung wenigstens einen Anschluß für eine Busleitung, insbesondere zwei Anschlüsse für ein Busleitungspaar aufweist. Die Schnittstellenvorrichtung weist einen selektiv mit dem wenigstens einen Anschluß elektrisch leitend verbindbaren Sendezweig auf, mittels dem Signale, die beispielsweise von dem Betriebsgerät her stammen, über die Schnittstelle zu der Busleitung gesendet werden können. Erfindungsgemäß ist eine Überwachungsschaltung vorgesehen, die die an dem Busanschluß anliegende Spannung erfaßt und eine Verbindung des Sendezweigs mit dem Anschluß, d.h. eine Freigabe des Sendezweigs, nur ermöglicht, wenn die zuvor erfaßte Spannung wenigstens ein definiertes Sicherheitskriterium erfüllt.

Dieses Sicherheitskriterium kann beispielsweise ein maximal zulässiger Wert für die Spannung an dem wenigstens einen Anschluß sein. Alternativ kann das Kriterium auch sein, daß während einer definierten Zeitdauer vor Freigabe des Sendezweigs die anliegende Spannung den maximal zulässigen Wert nicht überschritten hat.

Die definierte Zeitdauer kann beispielsweise durch die Zeitkonstante einer Tiefpasschaltung in die Überwachungsschaltung vorgegeben sein, wobei die Tiefpasschaltung nur ein Beispiel für eine Zeitsteuerung darstellt.

Diese Tiefpasschaltung (oder jede andere geeignete Zeitsteuerung) kann mit ihrer Ausgangsspannung einen Schalter ansteuern, der selektiv direkt oder indirekt den Sendezweig freischaltet.

Die definierte Zeitdauer kann beispielsweise in einem Bereich von 1 ms bis 10 ms gewählt sein und kann insbesondere so gewählt sein, daß sie der Zeitdauer einer Halbwelle einer potentiell anliegenden sinusförmigen Netzspannung entspricht.

Die Überwachungsschaltung kann insbesondere unabhängig von einem Controller der Schnittstellenschaltung ausgebildet sein, so daß die ordnungsgemäße Funktion der Überwachungsschaltung auch dann sichergestellt ist, wenn der Controller (noch) nicht in einem regulärem Betriebszustand ist.

Die Erfindung bezieht sich auch auf ein Betriebsgerät für Leuchtmittel, daß eine derartige Schaltung aufweist, sowie auf eine Leuchte mit einem derartigen Betriebsgerät.

Schließlich ist auch ein Verfahren zum Schutz einer Schnittstellenschaltung für ein Betriebsgerät für Leuchtmittel vorgesehen, wobei die Schnittstellenschaltung wenigstens einen Anschluß für eine Busleitung und einen selektiv mit diesem Anschluß verbindbaren Sendezweig aufweist. Gemäß der Erfindung wird die an dem Anschluß anliegende Spannung überwacht und der Sendezweig nur dann mit dem Anschluß elektrisch leitend verbunden (d.h. freigegeben), wenn die erfaßte Spannung wenigstens ein definiertes Kriterium erfüllt.

Weitere Merkmale, Vorteile und Eigenschaften der vorliegenden Erfindung sollen nunmehr bezugnehmend auf die Figuren der begleitenden Zeichnungen und anhand eines Ausführungsbeispiels erläutert werden.
Fig. 1 zeigt dabei eine schematische Ansicht einer erfindungsgemäßen Schnittstellenschaltung, die an einem EVG (elektronischem Vorschaltgerät) angeschlossen ist,
Fig. 2 zeigt weitere schaltungstechnische Merkmale einer erfindungsgemäßen Schaltung,
Fig. 3 zeigt ein erstes Zeitverlaufsdiagramm von Signalen in der erfindungsgemäßen Schnittstellenschaltung für den Fall des Anliegens einer Busspannung mit einem Maximalwert, der für den Sendezweig der Schnittstelle ungefährlich ist, und
Fig. 4 schließlich Zeitverlaufsprogramme von Signalen in der erfindungsgemäßen Schnittstellenschaltung für den Fall, daß eine Spannung (Netzspannung) an dem Anschluß vorliegt, die einen Maximalbetrag aufweist, der eine Zerstörung der Schnittstellenvorrichtung hervorrufen könnte.

Die vorliegende Erfindung sieht wie bereits eingangs genannt vor, den Sendezweig einer Schnittstellenschaltung abhängig von der Art einer anliegenden Busspannung aus- bzw. einzuschalten. Dadurch kann verhindert werden, daß beispielsweise im Falle des Anliegens einer Netzspannung an den Busklemmen unbeabsichtigt der Sendezweig eingeschaltet wird, was zur Zerstörung der Schnittstelle führen kann.

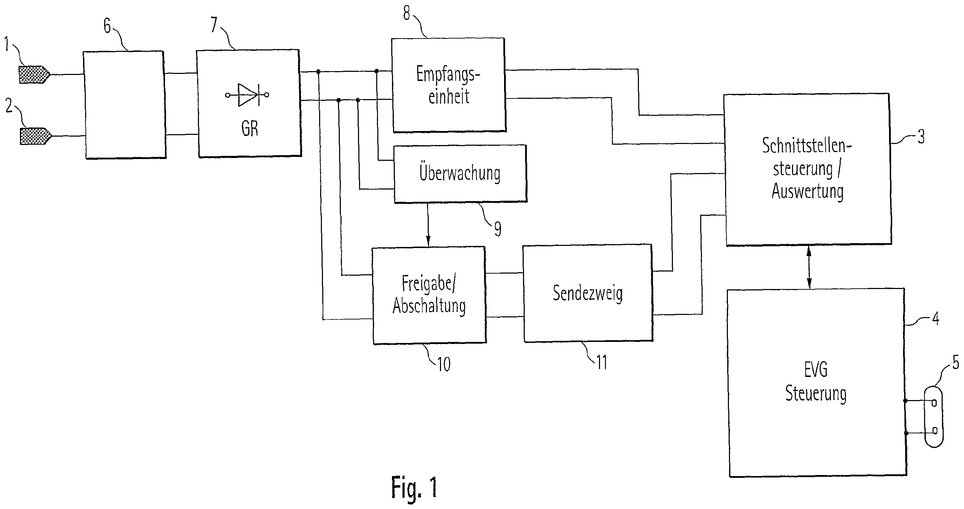

In Fig. 1 ist eine Schnittstellenvorrichtung mit zwei Anschlüssen 1, 2 für ein Busleitungspaar vorgesehen. Wie allgemein üblich weist die Schnittstellenvorrichtung eine Filter- und Schutzeinheit 6 sowie einen Gleichrichter 7 auf. Eine Empfangseinheit 8 stellt einen Empfangszweig dar, der über die Anschlüsse 1, 2 eingehende Signale an eine Schnittstellensteuerung/Auswerteschaltung 3 weitergibt. In der Schnittstellensteuerung/Auswerteeinheit 3 werden die empfangenen Signale verarbeitet und entsprechend aufgearbeitet an eine angeschlossenes Betriebsgerät, wie beispielsweise ein elektronisches Vorschaltgerät (EVG) 4 für eine Gasentladungslampe 5 weitergesendet.

Da sich wie gesagt die vorliegende Erfindung auf den Schutz des Sendezweigs konzentriert, wird hinsichtlich der Details des Empfangszweigs auf den Stand der Technik verwiesen. Im übrigen ist gemäss der Erfindung ein Empfangszweig nicht notwendigerweise vorhanden.

Wenn nunmehr das Betriebsgerät 4 über die Schnittstellensteuerung 3, die beispielsweise einen Controller aufweisen kann, und den Sendezweig 11 Signale an den anliegenden Bus mittels der Anschlüsse 1, 2 absenden möchte, muß sichergestellt sein, daß vor der Freischaltung des Sendezweigs 11 sicher erkannt wurde, daß keine unzulässig hohe Spannung an den Anschlüssen 1, 2 beabsichtigt oder unbeabsichtigt anliegt.

Dazu ist erfindungsgemäß eine Überwachungsschaltung 9 vorgesehen, die die anliegenden Spannungen an den Anschlüssen 1, 2 erfaßt, auswertet und abhängig davon, ob die erfaßte Klemmenspannung vorbestimmte Kriterien erfüllt, mittels einer Abschalteeinheit 10 den Sendezweig 11 selektiv abschaltet bzw. freigibt.

Für den Fall, daß eine "unschädliche" Spannung an den Anschlüssen 1, 2 anliegt, wie es beispielsweise bei einer Spannung gemäß dem Hochpegel des DALI-Standard der Fall ist, muß sichergestellt sein, daß der Sendezweig 11 nach einer Verzögerung von maximal einigen Millisekunden freigegeben wird. In dieser Zeitdauer soll also der Sendezweig auf jeden Fall abgeschaltet verbleiben, auch wenn er bereits von einem Mikrocontroller in der Schnittstellensteuerung/Auswerteschaltung 3 angesteuert werden sollte.

Liegt dagegen eine Netzspannung an den Anschlüssen 1, 2 an, muß die Überwachungszeitdauer durch die Überwachungsschaltung 9 wenigstens solange sein, bis die Netzspannung eine Halbwelle durchlaufen hat und nicht etwa der Sendezweig 11 freigegeben wird, weil zum Zeitpunkt der Überwachung gerade die Netzspannung eine niedrige Amplitude im Bereich des Nulldurchgangs aufwies. Das Anliegen der Netzspannung kann im übrigen ein zulässiger Zustand sein und nicht nur auf einem Verdrahtungsfehler beruhen. Die Schnittstelle kann nämlich dazu ausgelegt sein, Signale von außen auch dadurch zu empfangen, dass eine angelegte Netzspannung 'manipuliert' wird, d.h. beispielsweise durch einen Taster, Schalter, etc. ein- und ausgeschaltet wird. In diesem Fall kann durch Manipulieren der Netzschaltung eine Signalübermittlung durch die Anzahl und/oder Dauer der Netzspannungsimpulse bzw. der Unterbrechung der Netzspannung übertragen werden.

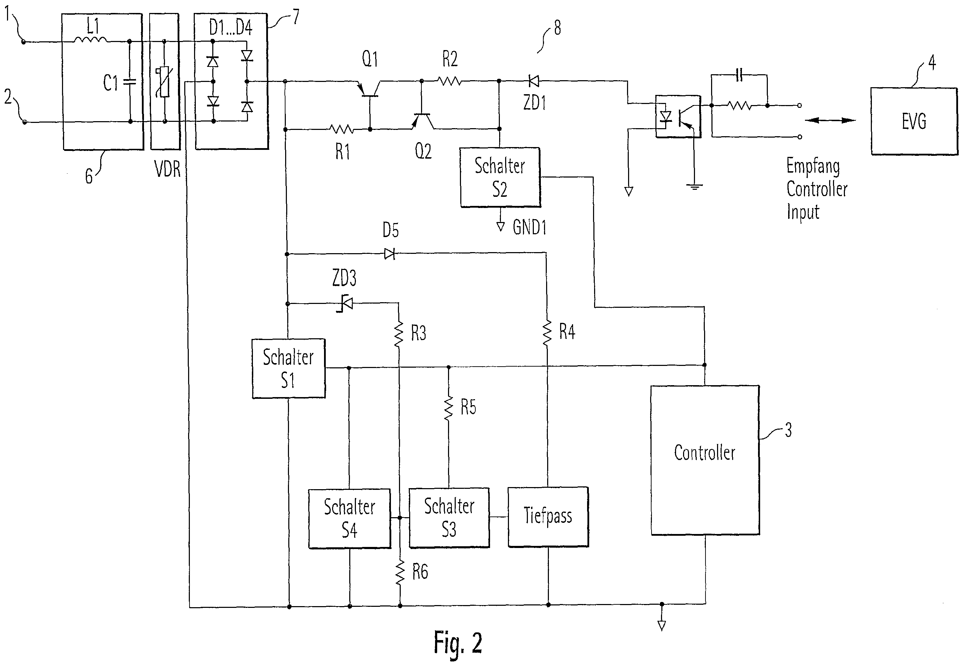

Weitere Details der Schaltung sollen nunmehr bezugnehmend auf Fig. 2 erläutert werden.

In dieser Figur ist zu sehen, daß eingangsseitig eine Schaltung mit einem LC-Glied L1, C1 als Filterschaltung vorgesehen ist. Anschließend folgt eine Schutzschaltung mit einem spannungsabhängigen Widerstand VDR, der seine Schutzwirkung allerdings erst nach einer Zeitdauer entfalten kann, zu der die Schnittstellenschaltung gegebenenfalls bereits zerstört sein kann.

Der Schalter S1 ist dazu vorgesehen, vom Controller 3 Signale auf den Bus 1, 2 zu modulieren, in dem bspw. der Hochpegel des DALI-Buses durch Schliessen des Schalters auf den niedrigen Pegel gezogen wird. Für den Fall einer allzu hohen Spannung an den Eingangsanschlüssen 1, 2 würde also zumindest dieser Schalter S1 in die Gefahr einer Zerstörung durch Kurzschluss geraten.

Bei der erfindungsgemäßen in Fig. 2 dargestellten Schaltung ist der Schalter 3 anfangs immer geschlossen. Da der Schalter 3 den Schalter 4 ansteuert, ist also auch der Schalter 4 anfangs geschlossen. Sobald sich dann eine Spannung am Eingang des Schalters 1 aufzubauen beginnt, wird diese über den geschlossenen Schalter 4 abgeleitet, so daß der Schalter zu diesem Zeitpunkt sicher geschlossen bleibt.

Eine zu diesem Zeitpunkt an dem Schalter 1 unbeabsichtigt anliegende Schaltspannung kann beispielsweise durch ein unbeabsichtigtes Ansteuern von dem Mikrocontroller 3 oder von eingekoppelten Störungen her rühren.

Wenn nunmehr eine Busspannung im Bereich üblicher Busversorgungssysteme, d.h. eine Spannung von bspw. maximal 24 Volt an den Anschlüssen 1, 2 anliegt, lädt sich der RC-Tiefpass über die Diode D5 auf. Nach einer vorbestimmten Zeitdauer, abhängig von der Dimensionierung des Tiefpasses, beispielsweise 2 ms, öffnet die Ausgangsspannung des Tiefpasses den Schalter 3, so daß dann auch der Schalter 4 geöffnet wird, da innerhalb dieser Zeitdauer die Busspannung nicht die Schaltschwelle der Zenerdiode Z3 von beispielsweise 24 Volt überschritten hat. Da in diesem Zustand der Schalter 4 geöffnet ist, kann der Schalter 1 vom Mikrocontroller angesteuert werden, so daß der Sendezweig also geöffnet ist und vom Controller ausgesandte Signale auf den Bus moduliert werden.

Wenn dagegen die Busspannung größer als ein vorgegebener maximal zulässiger Wert von beispielsweise 24 Volt ist und dieser Schwellwert in einer vorgegebenen Zeitdauer von beispielsweise 2 ms übertroffen wird, wird dagegen der Sendezweig wie im folgenden dargestellt nicht freigegeben:

Die Zeitdauer von beispielsweise 2 ms ist auf die Perioden üblicher AC-Netzspannungen mit einer Frequenz von 50 oder 60 Hz abgestimmt. Auch bei Anliegen eine derartigen hohen Spannung wird zunächst wieder der RC-Tiefpass aufgeladen, wobei in dieser Zeitdauer wiederum der Sendezweig gesperrt bleibt. Die anliegende Netzspannung wird aber in dem entsprechend bemessenen Zeitraum von beispielsweise 2 ms den Schwellenwert von beispielsweise 24 Volt überschreiten, so daß über die Zenerdiode ZD3 der Schalter 4 eingeschaltet bleibt. Der Schwellenwert wird also im vorliegenden Ausführungsbeispiel durch die Durchbruchspannung der Zenerdiode ZD3 definiert. Da in dem geschilderten Szenario der Schalter 4 eingeschaltet bleibt, bleibt auch der Schalter 1 gesperrt, und dies unabhängig von der Stellung des Schalters 3.

Wenn das erste Kriterium erfüllt ist, nämlich der Ablauf der vorgegebenen Zeitdauer und der Schalter S3 durch entsprechendes Aufladen der Tiefpasschaltung geöffnet wird, so ist bei Anliegen einer Netzspannung das zweite Kriterium, nämlich das Nichtüberschreiten einer maximal zulässigen Busspannung nicht erfüllt, so daß der Schalter S4 geschlossen bleibt.

Die Schnittstelle ist in diesem Zustand sicher gegen unbeabsichtigtes Einschalten des Schalters S1 geschützt. Die Sperrung des Schalters 1 bleibt auf jeden Fall für die Zeitdauer des Anliegens der Netzspannung erhalten.

Auch wenn die anliegende Busspannung an den Anschlüssen 1, 2 den maximal zulässigen Wert grundsätzlich nicht überschreitet, aber mit großen Störpegeln überlagert ist, werden auch diese Störpegel erfaßt und führen zu einer Sperrung des Schalters 1 wie oben im Falle für das Anliegen einer Netzspannung beschrieben, so daß der Sendezweig ab der Erfassung eines Störpegels bis zum Ablauf derjenigen Zeitdauer gesperrt bleibt, die wie gesagt durch die Dimensionierung der RC-Glieder der Tiefpasschaltung vorgegeben ist.

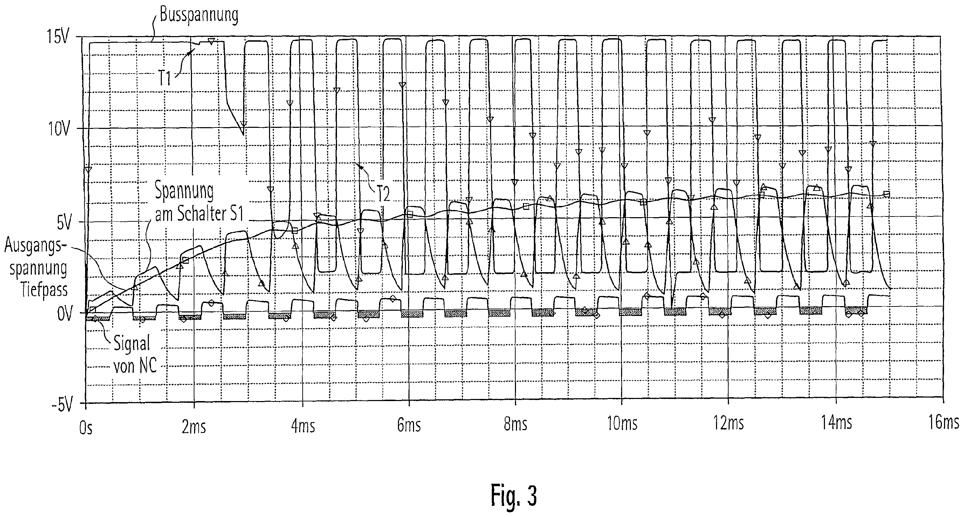

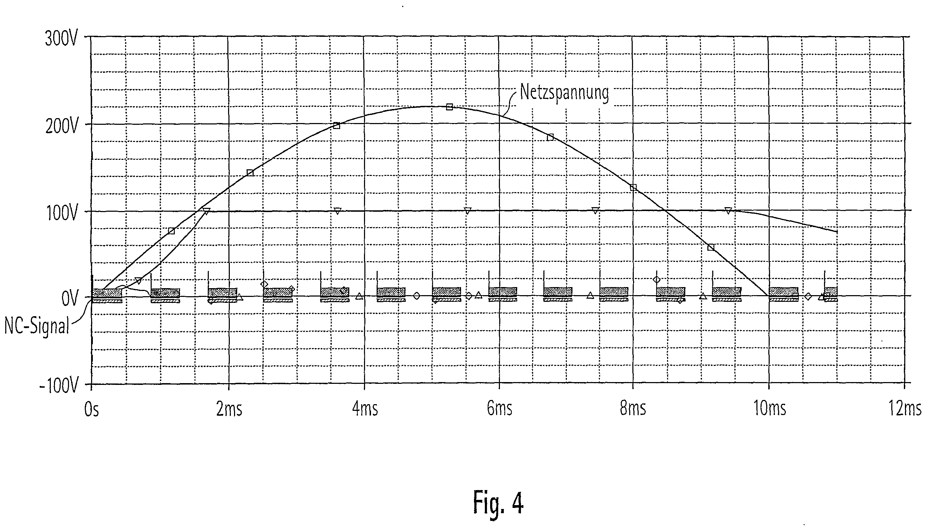

Anhand der Signalverläufe von Figur 3 und 4 sollen die obigen Szenarien nochmals verdeutlicht werden.

Fig. 3 zeigt dabei das Anliegen einer Busspannung von beispielsweise 15 Volt an den Anschlüssen 1, 2. Weiterhin ist in dem Szenario gemäß Fig. 3 angenommen, daß der Mikrocontroller bereits Signale an den Schalter S1 anliegt, die normalerweise zu einem Durchschalten der Busspannung führen würden. Weiterhin ist in Fig. 3 die tatsächlich am Schalter S1 anliegende Spannung sowie die Ausgangsspannung des Tiefpasses dargestellt.

Wie dargestellt kann bei einem Zeitpunkt T1 aufgrund der noch nicht ausreichend hohen Ausgangsspannung des Tiefpasses der Schalter S1 die Busspannung noch nicht auf den "Low"-Pegel ziehen. Der Zeitpunkt T1 liegt dabei bei etwa 2 ms. Erst ab einer Zeitdauer von etwa 5 ms (Zeitpunkt T2) ist die Ausgangsspannung an dem Tiefpass so hoch, dass die Mikrocontroller-Signale zu einer vollständigen Ansteuerung des Schalters S1 führen, so daß ab diesem Zeitpunkt T2 der korrekte Low-Pegel der Busspannung von etwa 2 Volt erreicht wird. Diese Verzögerung von 5 ms kann auf jeden Fall in Kauf genommen werden, da sie ja in den Zeitbereich fällt, in der der Mikrocontroller selbst noch am Hochfahren ist und noch keine reguläre Funktion ausübt.

In Fig. 4 ist die Situation gezeigt, daß an den Anschlüssen 1, 2 eine Netzspannung mit einem Maximalwert von 220 Volt anliegt. Wie am Verlauf der Netzspannung ersichtlich ist, bleibt der Sendezweig (Rückkanal) der Schnittstelleneinrichtung durchgehend gesperrt. Dies ist unabhängig davon, daß der Schalter S1 bereits vom Mikrocontroller durch Pulspakete angesteuert ist.

## Patentansprüche

1. Schnittstellenschaltung für ein Betriebsgerät (4) für Leuchtmittel (5), aufweisend:
- wenigstens einen Anschluss (1, 2) für eine Busleitung,
- einen selektiv mit dem wenigstens einen Anschluss (1, 2) elektrisch leitend verbindbaren Sendezweig (11) zur Weiterleitung von Signalen von der Schnittstelle zu der Busleitung, und
- eine Überwachungsschaltung (9), die die an dem Anschluss anliegende Spannung erfasst und eine Verbindung des Sendezweigs (11) mit dem Anschluss (1, 2) nur freigibt und den Sendezweig (11) selektiv mit dem wenigstens einen Anschluss (1, 2) elektrisch leitend verbindet, wenn die erfasste Spannung wenigstens ein definiertes Kriterium erfüllt
**dadurch gekennzeichnet, dass**
das definierte Kriterium ist, dass die erfasste Spannung während einer definierten Zeitdauer unter einem maximal zulässigen Wert liegt, bevor die Freigabe des Sendezweigs (11) erfolgt.

2. Schnittstellenschaltung nach Anspruch 1,
wobei das definierte Kriterium ein maximal zulässiger Wert für die Spannung an dem wenigstens einen Anschluss (1, 2) ist.

3. Schnittstellenschaltung nach Anspruch 1,
wobei die Überwachungsschaltung eine Tiefpassschaltung aufweist, deren Zeitkonstante die definierte Zeitdauer vorgibt.

4. Schnittstellenschaltung nach Anspruch 3,
wobei die Ausgangsspannung der Tiefpassschaltung einen Schalter ansteuert, der selektiv direkt oder indirekt den Sendezweig freischaltet.

5. Schnittstellenschaltung nach einem der Ansprüche 1 bis 5,
wobei die definierte Zeitdauer in einem Bereich vom 1 ms bis 10 ms gewählt ist.

6. Schnittstellenschaltung nach einem der vorhergehenden Ansprüche,
wobei die Überwachungsschaltung unabhängig von einem Controller der Schnittstellenschaltung ausgebildet ist.

7. Betriebsgerät für Leuchtmittel,
insbesondere elektronisches Vorschaltgerät für Leuchtstofflampen,
aufweisend eine Schaltung nach einem der vorhergehenden Ansprüche.

8. Leuchte, aufweisend eine Betriebsgerät nach Anspruch 7.

9. Verfahren zum Schutz einer Schnittstellenschaltung für ein Betriebsgerät (4) für Leuchtmittel (5), wobei die Schnittstellenschaltung aufweist:
- wenigstens einen Anschluss (1, 2) für eine Busleitung,
- einen selektiv mit dem wenigstens einen Anschluss (1, 2) elektrisch leitend verbindbaren Sendezweig (11) zur Weiterleitung von Signalen von der Schnittstelle zu der Busleitung,
aufweisend die Schritte
- der Überwachung der an dem Anschluss (1, 2) anliegenden Spannung, und
- der Freigabe er Verbindung des Sendezweigs (11) mit dem Anschluss (1, 2) und der selektiven elektrisch leitendenden Verbindung des Sendezweigs (11) mit dem wenigstens einen Anschluss (1, 2) nur dann, wenn die erfasste Spannung wenigstens ein definiertes Kriterium erfüllt,
**dadurch gekennzeichnet, dass**
das definierte Kriterium ist, dass die erfasste Spannung während einer definierten Zeitdauer unter einem definierten Schellenwert liegt, bevor die Freigabe des Sendezweigs erfolgt.

10. Verfahren nach Anspruch 9,
wobei das definierte Kriterium ein oberer Schwellenwert für die Spannung an dem wenigstens einen Anschluss (1, 2) ist.

11. Verfahren nach Anspruch 9,
wobei die Zeitkonstante einer Tiefpassschaltung die definierte Zeitdauer vorgibt.

12. Verfahren nach Anspruch 11,
wobei die Ausgangsspannung der Tiefpassschaltung einen Schalter ansteuert, der selektiv direkt oder indirekt den Sendezweig freischaltet.

13. Verfahren nach einem der Ansprüche 9 bis 12,
wobei die definierte Zeitdauer in einem Bereich vom 1 ms bis 10 ms gewählt ist.

## Claims

1. An interface circuit for an operational device (4) for illuminating means (5), having:
- at least one connection (1, 2) for a bus line,
- a selective electrically conductive emitting branch (11) which can be connected to the least one connection (1, 2) for routing signals from the interface to the bus line, and
- a monitoring circuit (9), which detects voltages on the connection and only authorizes a connection of the emitting branch (11) with the connection (1, 2) and selectively connects the emitting branch (11) electrically conductively with the at least one connection (1, 2), if the voltage detected fulfils at least one defined criterion,
**characterized in that**
the defined criterion is that the voltage detected is below a maximum permissible value during a defined time period, before the authorization of the emitting branch (11) takes place.

2. An interface circuit according to Claim 1,
wherein the defined criterion is a maximum permissible value for the voltage at the at least one connection (1, 2).

3. An interface circuit according to Claim 1,
wherein the monitoring circuit has a low-pass circuit, the time contant of which predefines the defined time period.

4. An interface circuit according to Claim 3
wherein the output voltage of the low-pass circuit controls a switch, which selectively enables the emitting branch directly or indirectly.

5. An interface circuit according to any one of Claims 1 to 5,
wherein the defined time period is selected in a range of 1 ms to 10 ms.

6. An interface circuit according to any one of the preceding claims,
wherein the monitoring circuit is formed independently of a controller of the interface circuit.

7. An operational device for illuminating means,
in particular, an electronic ballast for fluorescent lamps,
having a circuit according to any one of the preceding claims.

8. A lamp, having an operational device according to Claim 7.

9. A method for the protection of an interface circuit for an operational device (4) for illuminating means (5),
wherein the interface circuit has:
- at least one connection (1, 2) for a bus line,
- a selective electrically conductive emitting branch (11) which can be connected to the least one connection (1, 2) for routing signals from the interface to the bus line, having the steps
- the monitoring of the voltage on the connection (1, 2), and
- the authorization of the connection of the emitting branch (11) with the connection (1, 2) and the selective electrically conducive connection of the emitting branch (11) with the at least one connection (1, 2) only when the voltage detected fulfills at least one defined criterion,
**characterized in that**
the defined criterion is that the voltage detected is below a defined threshold value during a defined time period, before the authorization of the emitting branch takes place.

10. A method according to Claim 9,
wherein the defined criterion is an upper threshold value for the voltage at the at least one connection (1, 2).

11. A method according to Claim 9,
wherein the time constant of the low-pass circuit predefines the defined time period.

12. A method according to Claim 11,
wherein the output voltage of the low-pass circuit controls a switch, which selectively enables the emitting branch directly or indirectly.

13. A method according to any one of Claims 9 to 12,
wherein the defined time period is selected in a range of 1 ms to 10 ms.

## Revendications

1. Circuit d'interface pour un appareil de commande (4) pour un moyen d'éclairage (5), comprenant :
- au moins un raccordement (1, 2) pour une ligne de bus,
- un embranchement d'émission (11), pouvant être connecté de manière électro-conductrice de manière sélective avec l'au moins un raccordement (1, 2), pour la transmission de signaux de l'interface à la ligne de bus et
- un circuit de surveillance (9), qui mesure la tension appliquée au raccordement et n'autorise une connexion de l'embranchement d'émission (11) avec le raccordement (1, 2) et ne connecte de manière électro-conductrice de manière sélective l'embranchement d'émission (11) avec l'au moins un raccordement (1, 2) que lorsque la tension mesurée remplit au moins un critère défini,
**caractérisé en ce que**
le critère défini est que la tension mesurée se trouve, pendant une durée définie, en dessous d'une valeur maximale admissible, avant que l'activation de l'embranchement d'émission (11) ait lieu.

2. Circuit d'interface selon la revendication 1,
le critère défini étant une valeur maximale admissible pour la tension au niveau de l'au moins un raccordement (1, 2).

3. Circuit d'interface selon la revendication 1,
le circuit de surveillance comprenant un circuit passe-bas, dont la constante de temps détermine la durée définie.

4. Circuit d'interface selon la revendication 3,
la tension de sortie du circuit passe-bas contrôlant un commutateur qui active de manière sélective, directement ou indirectement l'embranchement d'émission.

5. Circuit d'interface selon l'une des revendications 1 à 5,
la durée définie étant choisie dans un intervalle de 1 ms à 10 ms.

6. Circuit d'interface selon l'une des revendications précédentes,
le circuit de surveillance étant conçu indépendamment d'un contrôleur du circuit d'interface.

7. Appareil de commande pour moyen d'éclairage,
plus particulièrement ballast électronique pour lampes à fluorescence, comprenant un circuit selon l'une des revendications précédentes.

8. Luminaire comprenant un appareil de commande selon la revendication 7.

9. Procédé de protection d'un circuit d'interface pour un appareil de commande (4) pour moyen d'éclairage (5), le circuit d'interface comprenant :
- au moins un raccordement (1, 2) pour une ligne de bus,
- un embranchement d'émission (11), pouvant être connectée de manière électro-conductrice de manière sélective avec l'au moins un raccordement (1, 2), pour la transmission de signaux de l'interface vers la ligne de bus, comprenant les étapes suivantes :
- surveillance de la tension au niveau du raccordement (1, 2) et
- autorisation de la connexion de l'embranchement d'émission (11) avec le raccordement (1, 2) et de la connexion électro-conductrice de l'embranchement d'émission (11) avec l'au moins un raccordement (1, 2) uniquement lorsque la tension mesurée remplit au moins un critère défini, **caractérisé en ce que**
le critère défini est que la tension mesurée se trouve, pendant une durée définie, en dessous d'une valeur seuil définie, avant que l'activation de l'embranchement d'émission ait lieu.

10. Procédé selon la revendication 9,
le critère défini étant une valeur de seuil supérieure pour la tension au niveau de l'au moins un raccordement (1, 2).

11. Procédé selon la revendication 9,
la constante de temps d'un circuit passe-bas déterminant la durée définie.

12. Procédé selon la revendication 11,
la tension de sortie du circuit passe-bas contrôlant un commutateur qui active de manière sélective, directement ou indirectement, l'embranchement d'émission.

13. Procédé selon l'une des revendications 9 à 12,
la durée définie étant choisie dans un intervalle de 1 ms à 10 ms.
